Europäisches Patentamt

European Patent Office

Office européen des brevets

(19)

(11) Publication number: **0 216 172**
**A2**

(12) **EUROPEAN PATENT APPLICATION**

(21) Application number: **86111798.4**

(22) Date of filing: **26.08.86**

(51) Int. Cl.⁴: **C 08 L 63/04**
**C 08 G 59/42, C 08 G 59/62**
**H 01 L 23/30**

(30) Priority: **26.08.85 US 769043**

(43) Date of publication of application:
**01.04.87 Bulletin 87/14**

(84) Designated Contracting States:
**AT CH DE FR GB IT LI NL SE**

(71) Applicant: **THE DOW CHEMICAL COMPANY**
**2030 Dow Center Abbott Road P.O. Box 1967**
**Midland, MI 48640(US)**

(72) Inventor: **Bogan, Gary W.**
**242 Corkwood**
**Lake Jackson Texas 77566(US)**

(72) Inventor: **Lucas, Peter A.**
**414 North Broad Street**
**Allentown Pennsylvania 18104(US)**

(72) Inventor: **Monnerat, Georgia A.**
**303 Caladium**
**Lake Jackson Texas 77566(US)**

(74) Representative: **Casalonga, Axel et al,**
**BUREAU D.A. CASALONGA OFFICE JOSSE & PETIT**
**Morassistrasse 8**
**D-8000 München 5(DE)**

(54) **Improved encapsulating compositions.**

(57) Electrical/electronic encapsulating compounds are pre-
pared from reinforced epoxy resin compositions comprising
(A) a filler material such as silica flour, (B) one or more epoxy
resins at least one of which is a hydrocarbon novolac epoxy
resin such as a phenol-dicyclopentadiene epoxy novolac resin
and (C) one or more epoxy resin curing agents such as phenol-
formaldehyde novolac resin. These compositions are part-
icularly suitable for use in electrical applications such as the
encapsulation and subsequent protection of electrical and
micro electronic devices and circuitry.

EP 0 216 172 A2

# IMPROVED ENCAPSULATING COMPOSITIONS

Encapsulating compositions have previously been prepared from epoxy resins such as phenol-aldehyde epoxy resins, cresol-aldehyde epoxy resins, bisphenol A epoxy resins, and the like. However, while these resins result in encapsulating compositions suitable for use in encapsulating electrical and electronic components, it would be desirable if such compositions had an improvement in one or more of the following: moisture resistance to prevent circuitry corrosion, resistance to thermal shock, stable electrical properties at elevated temperatures and the like.

It has now been discovered that the present invention provides an improvement in one or more of the following: moisture resistance; chemical resistance; thermal cycling characteristics and resistance to thermal shock; elevated temperature electrical properties; shrinkage characteristics; retention of physical, thermal, and electrical properties after moisture exposure; and milder exotherms during the curing process.

The present invention concerns an encapsulating composition comprising

    (A)   at least one filler material;

    (B)   at least one epoxy resin; and

    (C)   at least one curing agent for component (B);

characterized by employing as at least a part of component (B) at least one hydrocarbon epoxy novolac resin halogenated epoxy hydrocarbon novolac resin or combination thereof in an amount such that at least 40, preferably from 90 to 100 percent of the epoxy groups present in component (B) are contributed by said hydrocarbon epoxy novolac resins.

An encapsulating composition wherein

    (i)   component (A) is silica flour;

    (ii)  component (B) is the product resulting from dehydrohalogenating the reaction product of an epihalohydrin and (1) one or more hydrocarbon novolac resins, (2) one or more halogenated hydrocarbon novolac resins, (3) a combination of (1) and (2) or (4) a combination of (a) one or more hydrocarbon novolac resins or one or more halogenated hydrocarbon novolac resins or a combination thereof and (b) one or more phenol-aldehyde novolac resins, one or more halogenated phenol-aldehyde novolac resins, one or more bisphenol A based resins, one or more halogenated bisphenol A based resins or any combination thereof;

    (iii) component (C) is a phenolic material or a carboxylic acid anhydride or mixture thereof; and

(IV) said hydrocarbon epoxy novolac resin or halogenated hydrocarbon epoxy novolac resin is present in an amount such that from 90 to 100 percent of the epoxy groups present in component (B) are contributed by said hydrocarbon epoxy novolac resin or combination thereof is preferred embodiment.

An encapsulating composition wherein

(i) component (A) is silica flour;

(ii) component (B) is the product resulting from dehydrohalogenating the reaction product of an epihalohydrin and (1) one or more hydrocarbon novolac resins, (2) one or more halogenated hydrocarbon novolac resins, (3) a combination of (1) and (2) or (4) a combination of (a) one or more hydrocarbon novolac resins or one or more halogenated hydrocarbon novolac resins or a combination thereof and (b) one or more phenol-aldehyde novolac resins, one or more halogenated phenol-aldehyde novolac resins, one or more bisphenol A based resins, one or more halogenated bisphenol A based resins or any combination thereof;

(iii) component (C) is a phenolic material or a carboxylic acid anhydride or mixture thereof; and

(iv) said hydrocarbon epoxy novolac resin or halogenated hydrocarbon epoxy novolac resin is present in an amount such that from 90 to 100 percent of the epoxy groups present in component (B) are

~~contributed by said hydrocarbon epoxy~~ novolac resin ~~or combination~~ thereof is ~~a preferred embodiment.~~

An encapsulating composition wherein

(i)   component (B) contains the product resulting from dehydrohalogenating the reaction product of an epihalohydrin and the product resulting from reacting phenol, cresol or a combination thereof with (a) an unsaturated hydrocarbon containing from 6 to 55 carbon atoms per molecule or halogenated derivatives of such reaction products, or mixture of such hydrocarbons or halogenated derivatives thereof; (b) oligomers and/or cooligomers of hydrocarbon dienes, which dienes have from 4 to 24 carbon atoms or mixture of such hydrocarbons or halogenated derivatives thereof or (c) a combination of (a) and (b); and

(ii)  component (C) is a phenol-formaldehyde resin, hexahydrophthalic anhydride or the maleic anhydride adduct of methylcyclopentadiene or a combination thereof is another preferred embodiment.

An encapsulating composition wherein

(a)   component (B) contains

(i)   the product resulting from dehydrohalogenating the reaction product of epihalohydrin and the product resulting from reacting phenol, cresol or a combination thereof

34,079-F

with a composition comprising from 70 to 100 percent by weight of dicyclopentadiene, from zero to 30 percent by weight of $C_{10}$ dimers, from zero to 7 percent by weight of oligomers of $C_4$-$C_6$ unsaturated hydrocarbons and the balance if any to provide 100 percent by weight of $C_4$-$C_6$ alkanes, alkenes or dienes;

    (ii)   halogenated derivatives of the product of component (i); or

  (iii)   combinations thereof; and

(b)   component (C) is a phenol-formaldehyde resin, hexahydrophthalic anhydride or the maleic anhydride adduct of methylcyclopentadiene or a combination thereof is still another preferred embodiment.

Suitable hydrocarbon epoxy novolac resins which can be employed herein include those disclosed by Vegter et al in U.S. Patent 3,536,734, by Nelson in U.S. Patent 4,390,680 and Nelson et al in U.S. Patent 4,394,497. Particularly suitable hydrocarbon epoxy novolac resins include those prepared by dehydrohalogenating the reaction product of an epihalohydrin and the reaction product of an aromatic hydroxyl-containing compound with an unsaturated hydrocarbon having from 4 to 55 carbon atoms.

Suitable aromatic hydroxyl-containing compounds which can be employed herein include any such compounds which contain one or two aromatic rings, at least one phenolic hydroxyl group and at least one ortho or para ring position with respect to a hydroxyl group available for alkylation.

34,079-F                        -5-

Particularly suitable aromatic hydroxyl-containing compounds which can be employed herein include, for example, phenol, chlorophenol, bromo-phenol, dimethylphenol, methylphenol (cresol), hydro-quinone, catechol, resorcinol, guaiacol, pyrogallol, phloroglucinol, isopropylphenol, ethylphenol, propyl-phenol, t-butylphenol, isobutylphenol, octylphenol, nonylphenol, cumylphenol, p-phenylphenol, o-phenylphenol, m-phenylphenol, bisphenol A, dihydroxydiphenyl sulfone, and mixtures thereof.

Suitable unsaturated hydrocarbons which, either in a crude or purified state, can be employed herein include, for example, butadiene, isoprene, piperylene, cyclopentadiene, cyclopentene, 2-methylbutene-2, cyclohexene, cyclohexadiene, methyl cyclopentadiene, dicyclopentadiene, limonene, dipentene, linear and cyclic dimers of piperylene, methyl dicyclopentadiene, dimethyl dicyclopentadiene, norbornene, norbornadiene, ethylidine norbornene, and mixtures thereof. Also suitable unsaturated hydrocarbons include the other dimers, codimers, oligomers and cooligomers of the aforementioned unsaturated hydrocarbons. Particularly suitable unsaturated hydrocarbons which can be employed herein include, for example, a dicyclopentadiene concentrate containing from 70 to 100 percent by weight of dicyclopentadiene; from 0 to 30 percent by weight of $C_9$-$C_{12}$ dimers or codimers of $C_4$-$C_6$ dienes such as, for example, cyclopentadiene-isoprene, cyclo-pentadienepiperylene, cyclopentadienemethyl cyclopentadiene, and/or dimers of isoprene, piperylene, and methyl cyclopentadiene; from zero to 7 percent by weight of $C_{14}$-$C_{18}$ trimers of $C_4$-$C_6$ dienes and from zero to 10 percent by weight of aliphatic diolefins such as, for example, piperylene, isoprene, 1,5-hexadiene and cyclic olefins such as cyclopentadiene, methyl cyclopentadiene, and cyclopentene. Methods of preparation for these dicyclopentadiene concentrates and more detailed descriptions thereof can be found collectively in U.S. Patent No. 3,557,239 issued to Gebhart et al and U.S. Patent No. 4,167,542 issued to Nelson.

Also, particularly suitable unsaturated hydrocarbons which can be employed herein include a crude dicyclopentadiene stream containing from 20 to 70 percent by weight dicyclopentadiene, from 1 to 10 percent codimers and dimers of $C_4$-$C_6$ hydrocarbons (described above), from zero to 10 percent oligomers of $C_4$-$C_6$ dienes and the balance to provide 100 percent, $C_4$-$C_6$ alkanes, alkenes and dienes.

Also, particularly suitable unsaturated hydrocarbons which can be employed herein include a crude piperylene or isoprene stream containing from 30 to 70 percent by weight piperylene or isoprene, zero to ten percent by weight $C_9$-$C_{12}$ dimers and codimers of $C_4$-$C_6$ dienes, and the balance to provide 100 percent $C_4$-$C_6$ alkanes, alkenes and dienes.

Also, particularly suitable are hydrocarbon oligomers prepared by polymerization of the reactive components in the above hydrocarbon streams e.g., dicyclopentadiene concentrate, crude dicyclopentadiene, crude piperylene or isoprene, individually or in combination with one another or in combination with high purity diene streams.

These hydrocarbon epoxy novolac resins can be employed alone or in admixture with other epoxy resins such as the diglycidyl ethers of dihydric phenols such as, for example, resorcinol, catechol, hydroquinone, bisphenol A, bisphenol F, dihydroxybiphenyl, and mixtures thereof. Also suitable are the polyglycidyl ethers of phenolic materials having more than two hydroxyl groups such as, for example tris(hydroxyphenyl)methane, tetra(hydroxyphenyl)ethane, phenol-aldehyde novolacs, and mixtures thereof. Also suitable are the halogenated derivatives, particularly the brominated derivatives of the aforementioned epoxy resins.

Suitable curing agents which can be employed herein include, for example, amines, acids or anhydrides thereof, biguanides, imidazoles, urea-aldehyde resins, melamine-aldehyde resins, phenolics, halogenated phenolics, combinations thereof and the like. These and other curing agents are disclosed in Lee and Neville's Handbook of Epoxy Resins, McGraw-Hill Book Co., 1967. Particularly suitable curing agents include, for example, dicyandiamide, diaminodiphenylsulfone, hexahydrophthalic anhydride, 2-methylimidazole, diethylenetoluenediamine, bisphenol A, tetrabromobisphenol A, phenol-formaldehyde novolac resins, halogenated phenol-formaldehyde resins, the maleic anhydride adduct of methylcyclopentadiene (Nadic methyl anhydride), and combinations thereof.

Suitable filler materials which can be employed herein include, for example, finely divided silica flour, quartz, calcium silicate, barium sulfate, hydrated alumina. Filler selection will have varying effects on moisture permeation through the molded or encapsulated piece since they make up between 50 and 75 percent by weight of the complete composition.

Suitable catalysts or promoters or accelerators which can be employed include, for example, tertiary amines, imidazoles, phosphonium compounds, quaternary ammonium compounds, sulfonium compounds, phosphines, and mixtures thereof.

Suitable tertiary amines include, for example, triethylenediamine, N-methylmorpholine, triethylamine, tributylamine, benzyldimethylamine, tris(dimethylaminomethyl)phenol, and mixtures thereof.

Suitable imidazoles include, for example, 2-methylimidazole, 1-propylimidazole, and mixtures thereof.

Suitable phosphonium compounds include, for example, those disclosed by Dante, et al. in U.S. 3,477,990, Perry in Canadian Patent 893,191 and U.S. 3,948,855, and by Tyler, Jr., et al. in U.S. 4,366,295.

Suitable quaternary ammonium compounds include, for example, benzyl trimethyl ammonium chloride, benzyl trimethyl ammonium hydroxide, tetrabutyl ammonium chloride, tetrabutyl ammonium hydroxide, and mixtures thereof.

Suitable phosphines include, for example, triphenyl phosphine.

If desired, mold release agents can be employed in the encapsulating compositions of the present invention. Suitable such mold release agents include, for example, stearates such as glycerol monostearate, calcium stearate or waxes such as montan wax or carnauba, and combinations thereof.

The encapsulating compositions of the present invention are suitable for use in encapsulating electrical and electronic devices and the like. They are particularly suitable for use in encapsulation of micro circuitry typically found in discrete device and integrated circuits.

If desired, the composition of the present invention can also contain fire retardant additives, coupling agents and other additives as desired.

The following examples are illustrative of the invention, but are not to be construed as to limiting the scope thereof in any manner.

Epoxy Resin A is the glycidyl ether of the reaction product of phenol and a dicyclopentadiene concentrate consisting of about 83 percent DCPD, 1.4 percent non-reactive light hydrocarbons, and the remainder being primarily a mixture of codimers of $C_4$-$C_6$ dienes. This resin has an average functionality of 3.2 and an epoxide equivalent weight, EEW, of 279.

Epoxy Resin B was a cresol-formaldehyde epoxy novolac resin having an average functionality of 4-6 and an epoxide equivalent weight, EEW, of 219.

Epoxy Resin C was a diglycidyl ether of tetrabromobisphenol A having an average EEW of 450 and a bromine content of ~48 percent by weight.

Phenolic Resin A was a phenol-aldehyde novolac resin having an average functionality of 3-5 and a hydroxyl equivalent weight of 104 commercially available from Schenectady Chemicals, Inc., as HRJ 2190.

Accelerator A was 2-methylimidazole.

Mold Release Agent A was montan wax.

In the Example and Comparative Experiments, the transfer molding compositions were prepared from the indicated formulation in the following manner.

The transfer molding compositions were prepared from the indicated formulations on a two roll mill. One roll was operated at a temperature of 200°C to 210°C while the other roll was operated at a temperature of 250°C. The resin, silica flour and suitable mold release agent were thoroughly mixed to insure proper filler wetting. A brominated resin was then added in an amount to achieve approximately 1-2 percent bromine content by weight of the final formulation. Next a phenolic functional resin was added. When the mixture became homogeneous, an accelerator was added and mixed for no more than two minutes (120 s). The accelerator was added as a 10 percent by weight mixture in the phenolic resin. At the end of the two minute (120 s) period, the formulation was removed from the mill and the thin sheet allowed to cool to ambient temperature (25°C). A portion of the formulation was then ground into a powder and aged at 40°C to simulate storage conditions. About 20-25 g of each formulation was used to generate spiral flow information on the initial sample. Press platens were at approximately 350°F (176.7°C). The cycle times were 2.5 minutes (150 s). The pressure on the transfer ram was 1000 psi (6894.8 kPa). These same press conditions were employed to obtain circular discs 2 inches (50.8 mm) in diameter and 1/8 inch (3.175 mm) thick. The discs were subjected to a 4 hour (14,400 s) postbake at 350°F (176.7°C). The electrical properties were obtained according to the procedure of ASTM D-150 and ASTM D-257. Portions of the post-cured discs were cut out to run glass transition temperatures via thermomechanical analysis. After six days at 40°C the aged samples were molded in the spiral flow mold and the amount of flow compared to the results of the unaged samples. The results are given in the following Table I.

0216172

## TABLE I

|  | EXAMPLE 1 | COMPARATIVE EXPERIMENT A |
|---|---|---|
| **COMPOSITION** |  |  |
| Resin, Type/pbw | A/100 C/22.8 | B/100 C/22.8 |
| Silica Flour, pbw | 368 | 389 |
| Mold Release Agent, type/pbw | A/3 | A/3 |
| Phenolic Resin, Type/pbw | A/42.4 | A/52.5 |
| Accelerator, Type/pbw | A/0.5 | A/0.5 |
|  |  |  |
| **PROPERTIES** |  |  |
| Tg (TMA) | 177 | 186 |
| % Spiral Flow Retention After 6 days @ 40°C | 90 | 93 |
| Dissipation Factor @ $10^3$ cps 21°C | 0.004 | 0.005 |
| 150°C | 0.022 | 0.030 |
| Dielectric Constant @ $10^3$ cps 21°C | 3.99 | 4.2 |
| 150°C | 4.07 | 4.36 |
| Volume Resistivity @ 500V 21°C | $1 \times 10^{16}$ | $1 \times 10^{16}$ |
| 150°C | $3.35 \times 10^{11}$ | $1.45 \times 10^{11}$ |

Samples of the cured molding compositions were also tested for moisture resistance by placing them in an autoclave operated at a temperature of 250°F (121.1°C) and 15 psig (103.4 kPa) steam for 500 hours (1,800,000 s).

The results are given in the following Table II.

TABLE II

MOISTURE RESISTANCE

| Exposure Time hours/seconds | % Weight Gain | |
| --- | --- | --- |
| | Example 1 | Comp. Expt. A |
| 25/90,000 | 0.41 | 0.59 |
| 50/180,000 | 0.48 | 0.69 |
| 75/270,000 | 0.51 | 0.75 |
| 100/360,000 | 0.53 | 0.78 |
| 200/720,000 | 0.58 | 0.85 |
| 300/1,080,000 | 0.59 | 0.89 |
| 400/1,440,000 | 0.60 | 0.91 |
| 500/1,800,000 | 0.62 | 0.91 |

1. An encapsulating composition comprising

(A) at least one filler material;

(B) at least one epoxy resin; and

(C) at least one curing agent for component (B); characterized by employing as at least a part of component (B) at least one hydrocarbon epoxy novolac resin, halogenated epoxy hydrocarbon novolac resin or combination thereof in an amount such that at least 40 percent of the epoxy groups present in component (B) are contributed by said hydrocarbon epoxy novolac resins.

2. An encapsulating composition wherein

(i) component (A) is silica flour;

(ii) component (B) is the product resulting from dehydrohalogenating the reaction product of an epihalohydrin and (1) one or more hydrocarbon novolac resins, (2) one or more halogenated hydrocarbon novolac resins, (3) a combination of (1) and (2) or (4) a combination of (a) one or more hydrocarbon novolac resins or one or more halogenated hydrocarbon novolac resins or a combination thereof and (b) one or more phenol-aldehyde novolac resins, one or more halogenated phenol-aldehyde novolac resins, one or more bisphenol A based resins, one or more halogenated bisphenol A based resins or any combination thereof;

(iii) component (C) is a phenolic material or a carboxylic acid anhydride or mixture thereof; and

(iv) said hydrocarbon epoxy novolac resin or halogenated hydrocarbon epoxy novolac resin is present in an amount such that from 90 to 100 percent of the epoxy groups present in component (B) are contributed by said hydrocarbon epoxy novolac resin or combination thereof.

3. An encapsulating composition of Claim 2 wherein

(i) component (B) contains the product resulting from dehydrohalogenating the reaction product of an epihalohydrin and the product resulting from reacting phenol, cresol or a combination thereof with (a) an unsaturated hydrocarbon containing from 6 to 55 carbon atoms per molecule or halogenated derivatives of such reaction products, or mixture of such hydrocarbons or halogenated derivatives thereof; (b) oligomers and/or cooligomers of hydrocarbon dienes, which dienes have from 4 to 24 carbon atoms or mixture of such hydrocarbons or halogenated derivatives thereof or (c) a combination of (a) and (b); and

(ii) component (C) is a phenol-formaldehyde resin, hexahydrophthalic anhydride or the maleic anhydride adduct of methylcyclopentadiene or a combination thereof.

4. An encapsulating composition of Claim 2 wherein

(a) component (B) contains

(i) the product resulting from dehydrohalogenating the reaction product of epihalohydrin and the product resulting from reacting phenol, cresol or a combination thereof with a composition comprising from 70 to 100 percent by weight of dicyclopentadiene, from zero to 30 percent by weight of $C_{10}$ dimers, from zero to 7 percent by weight of oligomers of $C_4$-$C_6$ unsaturated hydrocarbons and the balance if any to provide 100 percent by weight of $C_4$-$C_6$ alkanes, alkenes or dienes;

(ii) halogenated derivatives of the product of component (i); or

(iii) combinations thereof; and

(b) component (C) is a phenol-formaldehyde resin, hexahydrophthalic anhydride or the maleic anhydride adduct of methylcyclopentadiene or a combination thereof.

34,079-F                    -17-

5.    An electrical component encapuslated with a composition of any claim 1 to 4.

1. Method for the preparation of encapsulating composition comprising the steps of mixing

(A)  at least one filler material;

(B)  at least one epoxy resin; and

(C)  at least one curing agent for component (B); characterized by employing as at least a part of component (B) at least one hydrocarbon epoxy novolac resin, halogenated epoxy hydrocarbon novolac resin or combination thereof in an amount such that at least 40 percent of the epoxy groups present in component (B) are contributed by said hydrocarbon epoxy novolac resins.

2.  Method according to claim 1 wherein

(i)  component (A) is silica flour;

(ii)  component (B) is the product resulting from dehydrohalogenating the reaction product of an epihalohydrin and (1) one or more hydrocarbon novolac resins, (2) one or more halogenated hydrocarbon novolac resins, (3) a combination of (1) and (2) or (4) a combination of (a) one or more hydrocarbon novolac resins or one or more halogenated hydrocarbon novolac resins or a combination thereof and (b) one or more phenol-aldehyde novolac resins, one or more halogenated phenol-aldehyde novolac resins, one or more bisphenol A based resins, one or more halogenated bisphenol A based resins or any combination thereof;

(iii) component (C) is a phenolic material or a carboxylic acid anhydride or mixture thereof; and

(iv) said hydrocarbon epoxy novolac resin or halogenated hydrocarbon epoxy novolac resin is present in an amount such that from 90 to 100 percent of the epoxy groups present in component (B) are contributed by said hydrocarbon epoxy novolac resin or combination thereof.

3.  Method according to claim 2 wherein

(i) component (B) contains the product resulting from dehydrohalogenating the reaction product of an epihalohydrin and the product resulting from reacting phenol, cresol or a combination thereof with (a) an unsaturated hydrocarbon containing from 6 to 55 carbon atoms per molecule or halogenated derivatives of such reaction products, or mixture of such hydrocarbons or halogenated derivatives thereof; (b) oligomers and/or cooligomers of hydrocarbon dienes, which dienes have from 4 to 24 carbon atoms or mixture of such hydrocarbons or halogenated derivatives thereof or (c) a combination of (a) and (b); and

(ii) component (C) is a phenol-formaldehyde resin, hexahydrophthalic anhydride or the maleic anhydride adduct of methylcyclopentadiene or a combination thereof.

4. Method according to claim 2 wherein

(a) component (B) contains
   (i) the product resulting from dehydrohalogenating the reaction product of epihalohydrin and the product resulting from reacting phenol, cresol or a combination thereof with a composition comprising from 70 to 100 percent by weight of dicyclopentadiene, from zero to 30 percent by weight of $C_{10}$ dimers, from zero to 7 percent by weight of oligomers of $C_4$-$C_6$ unsaturated hydrocarbons and the balance if any to provide 100 percent by weight of $C_4$-$C_6$ alkanes, alkenes or dienes;
   (ii) halogenated derivatives of the product of component (i); or
   (iii) combinations thereof; and
(b) component (C) is a phenol-formaldehyde resin, hexahydrophthalic anhydride or the maleic anhydride adduct of methylcyclopentadiene or a combination thereof.

0216172

5. Method of preparing an electrical component encapsulated with a composition prepared according to any of the methods of claims 1-4.